## Europäisches Patentamt

## European Patent Office

## Office européen des brevets

(11) Veröffentlichungsnummer: **0 262 351**
**B1**

(12) # EUROPÄISCHE PATENTSCHRIFT

(45) Veröffentlichungstag der Patentschrift:
24.10.90

(51) Int. Cl.⁵: **F02D 33/02**, F02D 41/34,
F02M 35/10, F02D 9/10

(21) Anmeldenummer: 87111522.6

(22) Anmeldetag: **10.08.87**

(54) Brennkraftmaschine mit wenigstens zwei Einlassventilen pro Zylinder.

(30) Priorität: 02.10.86 DE 3633509

(43) Veröffentlichungstag der Anmeldung:
06.04.88 Patentblatt 88/14

(45) Bekanntmachung des Hinweises auf die Patenterteilung:
24.10.90 Patentblatt 90/43

(84) Benannte Vertragsstaaten:
DE ES FR GB IT NL SE

(56) Entgegenhaltungen:
EP-A- 0 201 180
DE-A- 3 444 356
US-A- 4 002 152
US-A- 4 614 214

(73) Patentinhaber: Dr.Ing.h.c. F. Porsche
Aktiengesellschaft, Porschestrasse 42,
D-7000 Stuttgart 40(DE)

(72) Erfinder: Richter, Herwig, Dr. Dipl.-Ing., Hillerplatz 1,
D-7120 Bietigheim(AT)

ACTORUM AG

**Beschreibung**

Die Erfindung betrifft eine Brennkraftmaschine nach der Gattung des Hauptanspruchs (vergleiche US-A 4 614 174).

Brennkraftmaschinen werden häufig aufgrund des erreichbaren höheren Füllungsgrades mit zwei Einlaßventilen pro Zylinder ausgestattet. Um die durch diese Technik erreichbare Leistungsausbeute voll zu nutzen, ist es notwendig, die zu den Einlaßventilen hinführenden Ansaugrohre möglichst kurz zu halten. Hierdurch wird jedoch die Drehmomentcharakteristik der Brennkraftmaschine im unteren Drehzahlbereich negativ beeinflußt, so daß ein bei Fahrzeugmotoren erwünschter, fülliger Drehmomentverlauf in diesem Drehzahlbereich nicht erreichbar ist. Dieser erfordert wiederum möglichst lange Saugrohre, welche jedoch die erreichbare Leistungsausbeute bei hohen Drehzahlen begrenzt.

Aus diesem Grunde wurde in dem DE-GM 19 86 850 bereits vorgeschlagen, die zu den beiden Einlaßventilen hinführenden Ansaugrohre mit unterschiedlichen Längen bzw. Querschnitten auszustatten, wobei der kürzere im unteren Drehzahlbereich durch eine Klappe verschlossen ist und im oberen Drehzahlbereich geöffnet wird. Es handelt sich hierbei jedoch um eine Vergaserbrennkraftmaschine, welche gegenüber Einspritzbrennkraftmaschinen die bekannten Nachteile des ungünstigen Einspritzorts und deswegen der notwendigen Gemischstromumlenkung erfolgenden Kraftstoffniederschlags an den Saugrohrwänden aufweist.

Diese bekannten Nachteile lassen sich durch Verwendung einer Saugrohreinspritzung anstatt eines Vergasers zur Gemischbildung vermeiden. Um eine zu starke Ladeschichtung zu vermeiden, sind pro Ansaugrohr je ein Einspritzventil vorgesehen. Probleme ergeben sich hierbei aber beim Zuschalten des Ansaugkanals für den Vollastbetrieb bzw. dessen Einspritzventil, da sich die Strömungsverhältnisse in den beiden Ansaugrohren im Bezug zueinander während des Zu- bzw. Abschaltens mit der Bewegung der Klappe ändern. In der DE-OS 34 44 356 wurde daher schon vorgeschlagen, bereits vor dem vollständigen Öffnen bzw. während des Schließens der Klappe das Einspritzventil durch einige Einspritzimpulse anzusteuern.

Es ergibt sich jedoch auch hier eine Gemischfehlanpassung in der Umschaltphase, da das Ansauggemisch nur unvollständig an die sich verändernden Strömungsverhältnisse in den Ansaugrohren angepaßt ist.

Es ist daher Aufgabe der Erfindung, eine Kraftstoffzufuhr zu einer derartigen Brennkraftmaschine so vorzunehmen, daß eine Gemischfehlanpassung und/oder Ladungsschichtung während des Öffnens bzw. Schließens einer steuerbaren Klappe in einem von wenigstens zwei Ansaugkanälen vermieden wird.

Die Aufgabe wird durch die kennzeichnenden Merkmale des Anspruch 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß bei einer Brennkraftmaschine, welche mit wenigstens zwei Ansaugrohren ausgestattet ist und von denen wenigstens eines über eine Klappe verschließbar ist, eine Gemischfehlanpassung bzw. Ladungsschichtung während des Auf- bzw. Zusteuerns der Klappe vermieden wird, indem eine einem Zylinder zuzuführende Gesamtkraftstoffmenge entsprechend den sich mit der Bewegung der Klappe in den Ansaugrohren ändernden Strömungsverhältnissen über die jeweiligen Einspritzventile auf die beiden Ansaugrohre aufgeteilt wird.

Die Erfindung wird anhand von in den Zeichnungen dargestellten Ausführungsbeispielen nachstehend näher erläutert.

Es zeigt

Fig. 1 eine Vierventil-Brennkraftmaschine mit einer erfindungsgemäßen Ansauganlage,
Fig. 2 ein Öffnungswinkel-Zeitdiagramm einer Klappe in einem Ansaugrohr,
Fig. 3 ein Luftmassenstrom-Zeitdiagramm, welches die zeitliche Änderung der Strömungsverhältnisse in einem Ansaugrohrpaar wiedergibt,
Fig. 4 ein Einspritzmengen-Zeitdiagramm für Einspritzventile in diesem Ansaugrohrpaar,
Fig. 5 eine Öffnungsfunktion der Klappe,
Fig. 6 ein Flußdiagramm einer Einspritzmengenbestimmung für die Einspritzventile,
Fig. 7 ein Drehzahl-Lastdiagramm mit einer Umschaltschwelle,
Fig. 8 ein Drehzahl-Lastdiagramm nach Fig. 7, jedoch mit einer oberen Umschaltschwelle,
Fig. 9 ein Drehzahl-Lastdiagramm nach Fig. 7, jedoch mit einer unteren Umschaltschwelle,
Fig. 10 ein Flußdiagramm nach Fig. 6, jedoch für eine hysteresebehaftete Umschaltschwelle

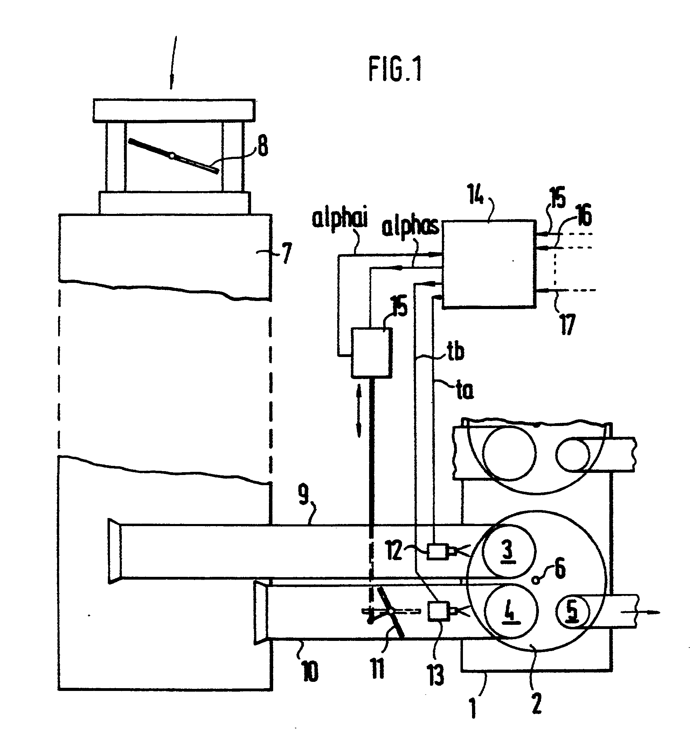

In Fig. 1 ist mit 1 eine Brennkraftmaschine gezeigt, deren Zylinder 2 wenigstens zwei Einlaßventile 3, 4 und wenigstens ein Auslaßventil 5 sowie eine Zündkerze 6 aufweisen. Von einem Ansaugluftverteiler 7, in dessen Ansaugöffnung eine Drosselklappe 8 angeordnet ist, führen getrennte erste und zweite Ansaugrohre 9, 10 zu den Einlaßventilen 3, 4 hin. Die Ansaugrohre 9, 10 sind zur Erlangung eines günstigen Drehmoment- bzw. Leistungs-Gesamtverhaltens der Brennkraftmaschine in Länge und/oder Querschnitt unterschiedlich dimensioniert. Das auf den Teillastbereich abgestimmte erste Ansaugrohr 9 weist eine größere Länge auf als das auf den Vollastbereich abgestimmte zweite Ansaugrohr 10; das zweite Ansaugrohr 10 ist hierbei über eine Klappe 11 öffen- bzw. verschließbar.

In beiden Ansaugrohren 9, 10 sind Einspritzventile 12, 13 angeordnet, welche eine Kraftstoffmenge entsprechend der Ausgangssignale ta, tb eines Steuergeräts 14 in die Ansaugrohre 9, 10 abspritzen (die Kraftstoffzuleitungen sind aus Übersichtlichkeitsgründen nicht gezeigt). Die Ausgangssignale ta, tb üblicher Kraftstoff-Einspritzsysteme mit intermittierender Kraftstoffeinspritzung sind üblicherweise pulsbreiten- oder pulsdauermodulierte Spannungssignale, deren Tastverhältnis auch als Einspritzzeit bezeichnet wird. Bei einem konstanten Kraftstoffdruck an den Einspritzventilen ist die eingespritzte Kraftstoffmenge praktisch der Einspritzzeit proportional, so daß im weiteren die Ausgangssignale ta, tb als Kraftstoffmengen bezeichnet werden.

Die Klappe 11 wird mittels eines Stellmechanismus 15 entsprechend einem vom Steuergerät 14 bereitgestellten Steuersignal (Klappensollstellung alphas) in seine geöffnete (alphas = 90°) bzw. geschlossene Lage (alphas = 0°) gesteuert. Zur Bestimmung der von den Einspritzventilen 12, 13 abzuspritzenden Kraftstoffmengen ta, tb und der Klappensollstellung alphas ermittelt das Steuergerät 14 in an sich bekannter Weise über Eingangssignale 15 bis 17 verschiedene Betriebsbedingungen der Brennkraftmaschine, wie beispielsweise eine ihr zugeführte Luftmasse ml, ihre Drehzahl nmot, ihre Temperatur tm, usw. sowie eine Klappeniststellung alphai.

Durch das längere erste Ansaugrohr 9 ergibt sich hiermit bei geschlossener Klappe 11 (Einkanalbetrieb) der erwünschte "fülligere" Drehmomentverlauf im unteren Drehzahlbereich, während sich bei geöffneter Klappe (Zweikanalbetrieb) durch das kurze Ansaugrohr 10 die praktisch maximal mögliche Leistung im oberen Drehzahlbereich einstellt.

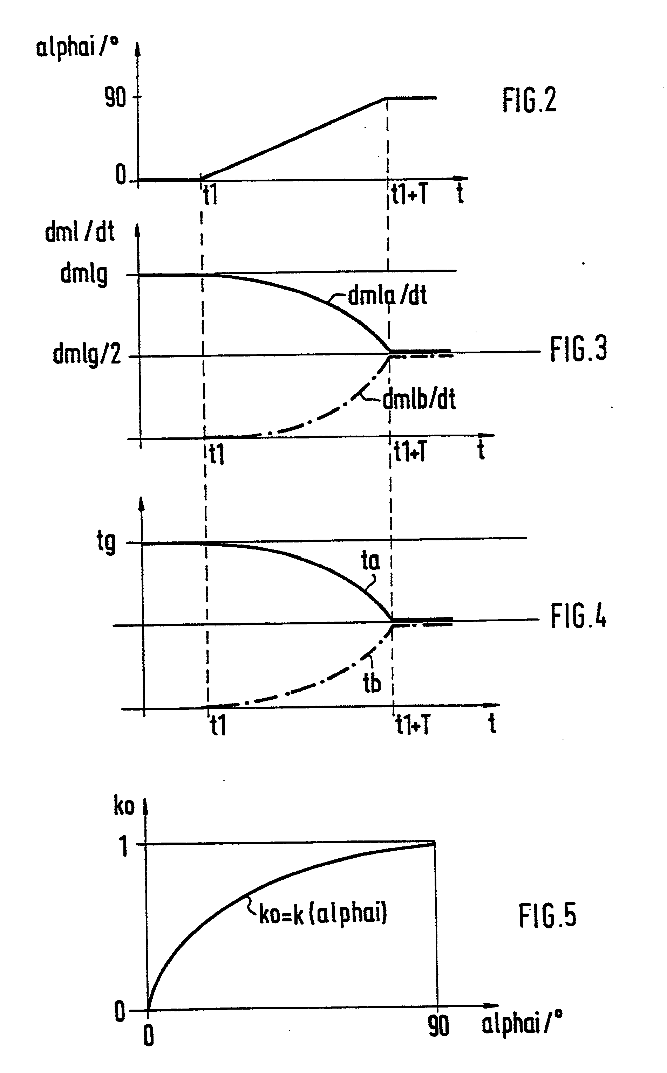

Hierbei ergibt sich jedoch eine gewisse Problematik beim Umschalten zwischen Einkanalbetrieb und Zweikanalbetrieb:
Aufgrund der Trägheit des physikalischen Systems Klappe - Luftströmungsverhältnisse stellen sich die gewünschten stationären bzw. quasistationären Anteile der Strömung in den beiden Saugrohren 9, 10 an der dem Zylinder zugeführten Gesamtströmung nicht schlagartig ein; zum einen, weil die Klappe 11 nicht in beliebig kurzer Zeit zwischen ihren beiden Endstellungungen hin- und herbewegt werden kann, zum anderen, weil sich ein gewünschtes Strömungsverhältnis erst mit einer gewissen Trägheit einstellt (u. a. wegen der unvermeidlichen Strömungswiderstände der gespeicherten Luftvolumina, der getakteten Arbeitsweise der Brennkraftmaschine 1 und der Schwingungen in den Ansaugrohren 9, 10). Dies wird insbesondere in den Fig. 2 bis 4 deutlich.

Entsprechend Fig. 2 ist angenommen, daß die Klappe 11 durch den Stellmechanismus 14 während einer Zeitspanne T von einem Zeitpunkt t1 beginnend, annähernd linear geöffnet wird. Hierbei sei für die weitere Betrachtung zunächst vereinfachend angenommen, daß sich die Strömungsanteile (Luftmassenanteile) in den beiden Ansaugrohren bei geöffneter Klappe 11 (Zweikanalbetrieb) wie 1 : 1 verhalten.

Fig. 3 ist zu entnehmen, wie ein Luftmassenstrom dmla/dt im ersten Ansaugrohr 9 in dieser Zeitspanne T von dmlg auf dmlg/2 abnimmt, und eine Luftmassenstrom dmlb/dt im zweiten Ansaugrohr 10 in gleichem Maße zunimmt, weiter vorausgesetzt, daß der Gesamtmassenstrom dmlg während dieses Vorgangs annähernd konstant bleibt.

Würde man nun die in das erste Ansaugrohr 9 eingespritzte Kraftstoffmenge ta einfach bei Öffnungsbeginn oder bei Erreichen des vollständigen Öffnungsgrads schlagartig um die Hälfte reduzieren und die andere Hälfte der Gesamtkraftstoffmenge tg in das zweite Ansaugrohr 10 abspritzen, käme es während der Zeitspanne T zu einer starken Gemischfehlanpassung und zudem zu einer unerwünscht starken Ladungsschichtung im Brennraum.

Auch das Einspritzen einzelner Kraftstoffimpulse während der Umschaltphase, wie es in der DE-OS 34 44 356 erwähnt ist, bringt nicht die erforderliche Genauigkeit der Gemischaufbereitung, da sich die Strömungsverhältnisse in den Ansaugrohren, wie gezeigt, stark nichtlinear ändern.

Um nun eine optimale Gemischaufbereitung zu erhalten, ist die dem Zylinder zuzuführende Kraftstoffgesamtmenge während des Öffnens bzw. Schließens der Klappe entsprechend den augenblicklich in den Ansaugrohren 9, 10 herrschenden Strömungsverhältnissen auf die Ansaugrohre zu verteilen, wie dies im Diagramm nach Fig. 4 dargestellt ist.

Zur exakten Ermittlung der Strömungsverhältnisse, d.h., der dem Zylinder über die jeweiligen Ansaugrohre zugeführten Luftmassenanteile mla, mlb pro Arbeitszyklus bzw. Berechnungszeit bzw. der in die Ansaugrohre abzuspritzenden Kraftstoffmenge ta, tb, müßten nun in jedem Saugrohr getrennte Luftmassenmeßvorrichtungen angeordnet werden, was jedoch aus Gründen des Aufwands wenig sinnvoll erscheint.

Es wird daher eine Öffnungfunktion k(alphai), Fig. 5, definiert, welche einem Öffnungswinkel alphai einen Korrekturwert ko=k(alphai) zuweist, mit dem letzlich die Kraftstoffmengen ta, tb bestimmt werden (siehe weiter unten).

Diese Öffnungsfunktion k wird bei geeigneter Wahl der Zeitspanne T für die Verstellbewegung der Klappe statischen wie dynamischen Vorgängen in den Ansaugrohren 9, 10 bei guter Genauigkeit der Gemischaufbereitung gerecht. Zur Bestimmung der Gesamtkraftstoffmenge tg wird nur noch eine einzige Meßvorrichtung zur Ermittlung der Luftmenge bzw. -masse für alle Saugrohre bzw. Zylinder benötigt.

Als Steuergerät kann ein bekannter Einspritzsteuerrechner, beispielsweise einer D- oder L-Jetronic oder Motronic der Fa. Bosch Verwendung finden, der dann lediglich um einen Digitalausgang für die Ansteuerung des Stellmechanismus 15 für die Klappe 11, einen Analog- oder Digitaleingang für die Iststellung alphai der Klappe 11 und ein notwendiges Steuerprogramm zu erweitern ist sowie jeweils um einen weiteren Ausgang einschließlich je einer Treiberstufe pro zusätzlichem Einspritzventil.

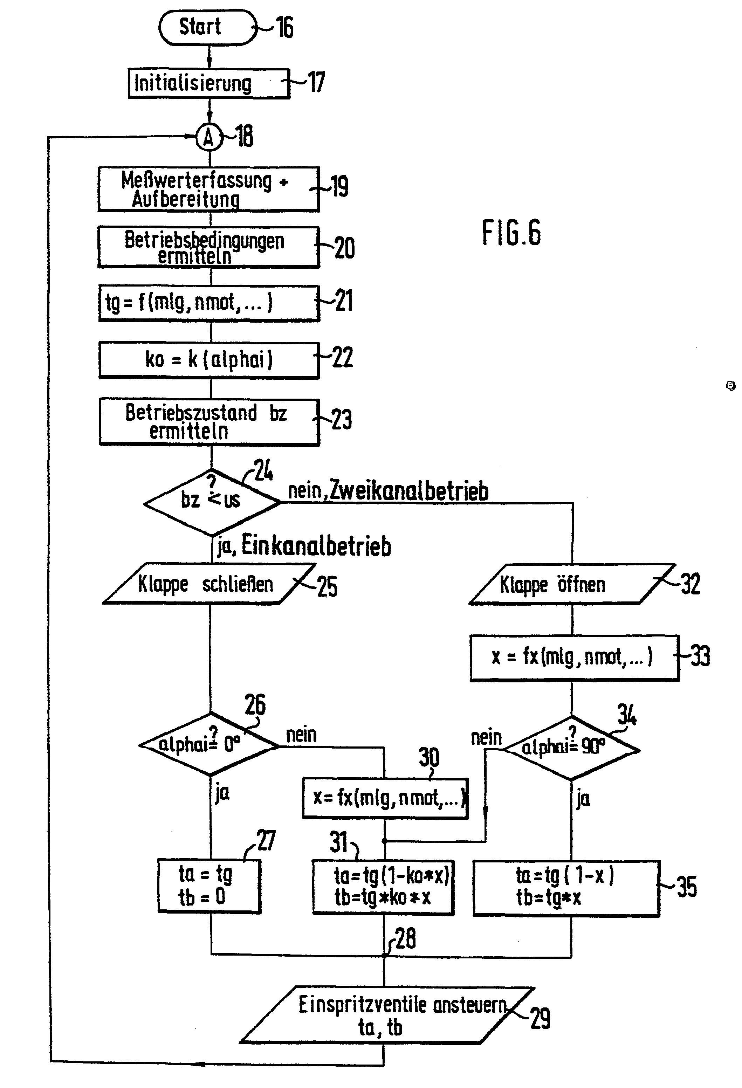

Ein Flußdiagramm eines derartigen Steuerprogramms ist in Fig. 6 dargestellt. Nach einem Systemstart 16 beim Startvorgang der Brennkraftmaschine erfolgt zunächst eine Initialisierung 17 des Steuergeräts 14 (Speicher zurücksetzen, Programme und Parameter laden).

Nach Durchlaufen einer Marke A, 18, werden zunächst Meßwerte (von nicht gezeigten) Sensoren erfaßt und aufbereitet, 19: So werden beispielsweise ein Luftmengen- oder Drucksignal im Ansaugrohr erfaßt, die Motordrehzahl nmot, die Luftzahl lambda, die Motortemperatur tm und die Klappenstellung alphai bestimmt und u. U. um weitere Größen ergänzt. Aus diesen Mewerten werden nun die Betriebsbedingungen der Brennkraftmaschine ermittelt (Gesamt-Luftmasse mlg als Lastinformation, usw.) 20, und die einzuspritzende Gesamtkraftstoffmenge tg (Gesamteinspritzdauer) aus einem Einspritzzeitkennfeld in Abhängigkeit der Betriebsbedingungen ermittelt, tg=f(mlg, nmot, lambda, tm....) 21, wie dies bei den Kraftstoffeinspritzsystemen nach dem Stand der Technik vorgesehen ist. Schließlich erfolgt noch die Bestimmung des Korrekturfaktors ko=k(alphai) über die Öffnungsfunktion k aus der Iststellung der Klappe alphai, 23 und die Ermittlung des Betriebszustandes bz der Brennkraftmaschine, d.h., ob sich diese im Einkanal- oder im Zweikanalbetrieb befindet, 23.

Es wird abgefragt, ob der Betriebszustand bz kleiner als eine Umschaltschwelle us ist, 24. Ist dies der Fall (Einkanalbetrieb), so wird die Klappe 11 in Schließrichtung angesteuert, 25. Anschließend wird abgefragt, ob die Klappe bereits geschlossen ist, d.h., alphai = 0°, 26. Ist dies der Fall, so wird die gesamte Kraftstoffmenge tg über das Einspritzventil 12 im ersten Ansaugkanal 9 eingespritzt, Kraftstoffmenge ta = tg, Kraftstoffmenge tb=0, Kraftstoffmengenbestimmung 27, und über einen Punkt 28 zur Ausgabe der Ansteuerimpulse für die Einspritzventile 12, 13 fortgefahren, 29; ist die Bedingung 26 nicht erfüllt, so wird ein Verteilungsfaktor x aus einem Kennfeld fx(mlg, nmot...) bestimmt, 30, und die Kraftstoffgesamtmenge tg entsprechend dem aktuellen Korrekturfaktor ko und dem aktuellen Verteilungsfaktor x auf die Einspritzventile 12, 13 aufgeteilt (Einspritzventil 12: Kraftstoffmenge ta=tg (1-ko*x), Einspritzventil 13: Kraftstoffmenge tb=tg*ko*x), Kraftstoffmengenbestimmung 31.

Der Verteilungsfaktor x berücksichtigt hierbei, daß die Luftmassenströme dmla/dt und dmlb/dt in den beiden Saugrohren 9, 10 im allgemeinen unterschiedlich groß sind (und nicht wie oben angenommen, gleiche Anteile aufweisen; in diesem seltenen Fall ist x=1/2 zu setzen, wodurch sich die Berechnungsformeln vereinfachen und die Berechnung von x entfallen kann). Der Verteilungsfaktor x wird nun so definiert, daß er dem Anteil der durch das zweite Ansaugrohr 10 geführten Luftmasse mlb, bezogen auf die dem Zylinder zugeführte Gesamt-Luftmass mlg ist: x=mlb/mlg; der resultierende Anteil der durch das Ansaugrohr geführten Luftmasse mla ergibt sich somit zu (1-x)=mla/mlg. Ergänzend sei an dieser Stelle angemerkt, daß es sich bei dem Kraftstoff-Einspritzsystem um ein System mit intermittierender Kraftstoffeinspritzung (bzw. Arbeitsweise) handelt, das die einzuspritzende Kraftstoffmenge tg bzw. die angesaugte Luftmasse ml wenigstens einmal pro Umdrehung der Brennkraftmaschine ermittelt; durch diese "integrierende" Arbeitsweise brauchen daher nicht die Luftmassenströme dml/dt selbst bestimmt werden, sondern es ergeben sich praktisch automatisch Luftmassen ml (die ja durch zeitliche Integration aus den Luftmassenströmen dml/dt hervorgehen).

Da der Korrekturfaktor x im allgemeinen nicht nur von der Geometrie der Ansaugrohre 9, 10 abhängt, sondern von den sich im Ansaugrohr ausbildenden Schwingungen und (in mehr oder weniger nichtlinearem Maße) auch von den Betriebsbedingungen der Brennkraftmaschine wie Drehzahl und Last wird er über das Kennfeld fx(mlg, nmot...), beispielsweise aus der Gesamtluftmasse mlg und der Drehzahl nmot bestimmt.

Ergibt die Abfrage 24 jedoch nein, d. h., die Information "Zweikanalbetrieb", so wird die Klappe 11 in Öffnungsstellung angesteuert, 31. Es wird wiederum der Verteilungsfaktor wie in der Anweisung 30 bestimmt, 33 und abgefragt, ob die Klappe 11 bereits geöffnet ist, d. h., ob alphai=90° ist, 34. Ist dies der Fall, so wird die Gesamtkraftstoffmenge tg entsprechend der stationären Strömungsanteile in den Ansaugrohren 9, 10 auf diese aufgeteilt, ta=tg(1-x), tb=tg*x(y+x), Kraftstoffmengenbestimmung 35; ist die Bedingung 34 dagegen nicht erfüllt, so wird die Kraftstoffmengenaufteilung wieder entsprechend dem Korrekturwert ko bestimmt, 31.

Von den Anweisungen 31 und 35 kehrt das System, wie von der Anweisung 27, wieder über den Punkt 28 zur Ansteuerung der Einspritzventile, 29 und von dort zur Marke A, 18 zurück; von dort aus erfolgt schließlich der Durchlauf des Programms von neuem.

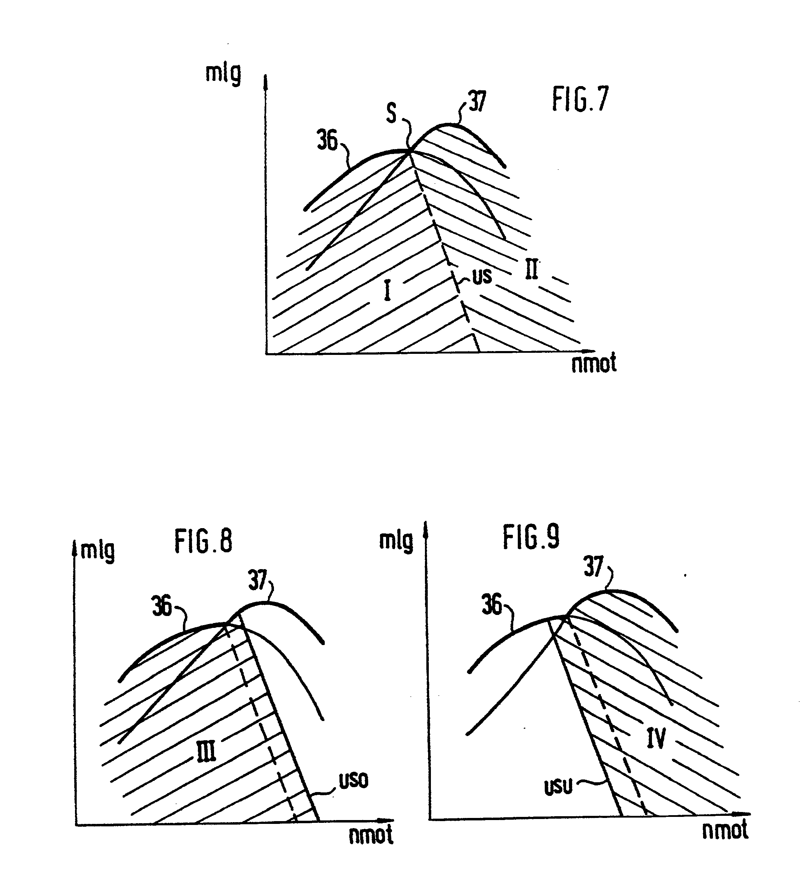

Die Bestimmung des Betriebszustands nach Anweisung 23 und die Abfrage 24 (bz kleiner us) ist anhand eines Drehzahl-Last-Diagramms nach Fig. 7 gezeigt; hierbei ist jedoch - ohne Einschränkung der Allgemeinheit - der Einfachheit halber angenommen, daß der Betriebszustand lediglich aus der angesaugten Luftmasse ml als Lastinformation und der Drehzahl nmot der Brennkraftmaschine ermittelt wird.

Das Diagramm zeigt deutlich zwei sich bei einem Schnittpunkt S schneidende (Drehmoment-)Kurven, wobei sich die Kurve 36 bei Einkanalbetrieb oder bei Ausstattung der Brennkraftmaschine mit langen Saugrohren und die Kurve 37 bei Zweikanalbetrieb oder bei kurzen Saugrohren ergibt. Ebenso gezeigt ist eine durch den Schnittpunkt S verlaufende Umschaltschwelle us, wobei in einem Gebiet I links von dieser der Einkanalbetrieb und in einem Gebiet II rechts von dieser der Zweikanalbetrieb definiert ist.

Kommt die Klappensteuerung, wie oben beschrieben, zur Anwendung, so verläuft im übrigen die resultierende Drehmomentkurve (dick gezeichnet) jenseits des Schnittpunkts S jeweils auf den oberen Ästen der Kurven 36, 37, sowohl im Einkanal- wie auch im Zweikanalbetrieb.

Unter Umständen kann eine derartige Steuerung mit festliegender Umschaltschwelle bei manchen Brennkraftmaschinen zu einem instabilen Betrieb um die Umschaltschwelle us führen. Deshalb ist es sinnvoll, die Umschaltschwelle zu einer Hysterese mit einer oberen Umschaltschwelle uso und einer unteren Umschaltschwelle usu auseinanderzuziehen, wie dies in Fig. 8 und 9 demonstriert ist. Die Umschaltung vom Einkanalbetrieb (Bereich III) in den Zweikanalbetrieb (Bereich IV) erfolgt dann erst bei höheren Werten von Last und Drehzahl, während umgekehrt die Umschaltung vom Zweikanalbetrieb in den Einkanalbetrieb bei niedrigeren Werten dieser Größen erfolgt.

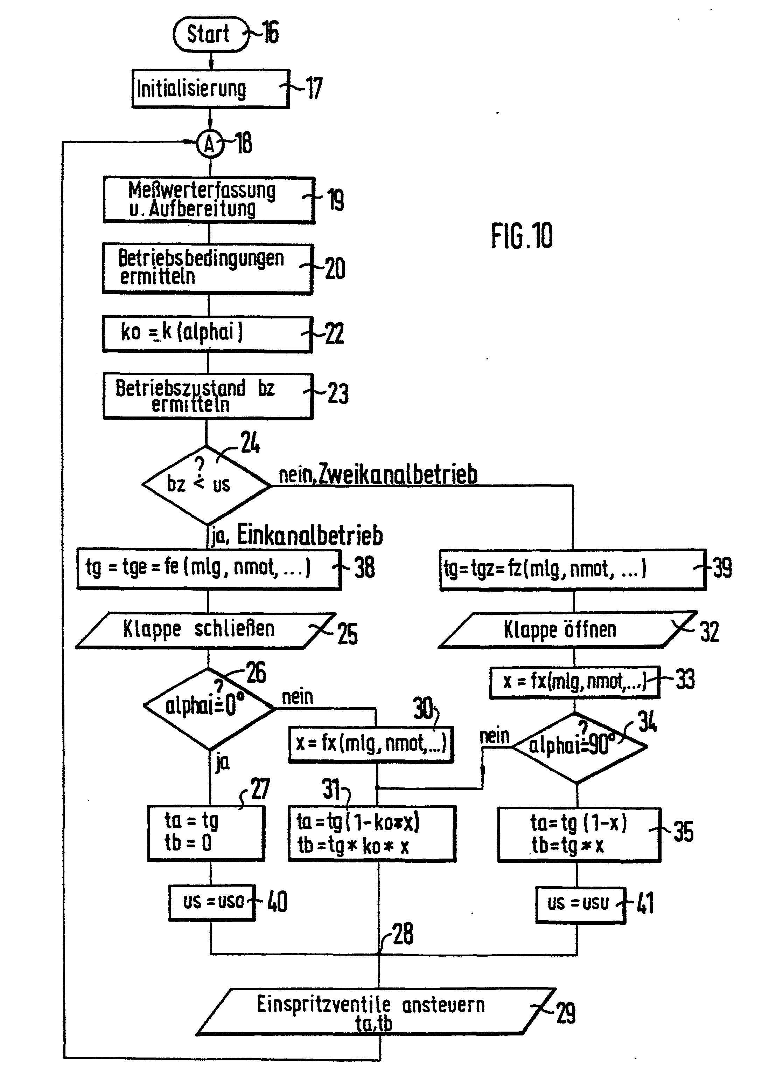

Ein Flußdiagramm für eine solche hysteresebehaftete Steuerung von Klappenstellung alpha und Einspritzmengen ta, tb ist in Fig. 10 gezeigt.

Systemstart 16, Initialisierung 17, Anlauf der Marke A, 18, Meßwerterfassung 19, Ermittlung der Betriebsbedingungen 20, erfolgt entsprechend dem Flußdiagramm nach Fig. 6, ebenso die Ermittlung des Korrekturwerts ko, 22, des Betriebszustandes bz, 23, und der Abfrage bz kleiner us, 24. Die Bestimmung der einzuspritzenden Gesamtkraftstoffmenge tg erfolgt jedoch erst nach der Abfrage 24 getrennt für Einkanal- und Zweikanalbetrieb, und zwar aus einem Einkanalkennfeld fe(mlg,nmot...) nach der Beziehung tg=tge=fe(mlg,nmot...), 38 bzw. einem Zweikanalkennfeld fz(mlg, nmot...), nach der Beziehung tg=tgz=fz(mlg, nmot...), 39. Der weitere Programmdurchlauf mit der Ansteuerung der Klappe 11, 25 bzw. 32, der Abfrage 26, der Korrekturfaktorbestimmung 30 bzw. 33 und der Abfrage 34 sowie den Kraftstoffmengenbestimmungen 27, 31, 35 erfolgt wiederum wie in Fig. 6. Anschließend erfolgt noch nach der Kraftstoffmengenbestimmung 27 das Setzen der Umschaltschwelle us auf die obere Umschaltschwelle us=uso, 40, bzw. nach der Kraftstoffmengenbestimmung 35 das Setzen der Umschaltschwelle us auf die untere Umschaltschwelle us=usu, 41. Nach Durchlaufen des Verzweigungspunkts 28 und der Ansteuerung der Einspritzventile 29 erfolgt der Rücksprung zur Marke A, 18 und der Programmdurchlauf erfolgt von neuem.

**Patentansprüche**

1. Mehrzylinder-Brennkraftmaschine mit wenigstens zwei Einlaßventilen pro Zylinder, zu denen getrennte, in Länge und/oder Querschnitt unterschiedlich dimensionierte, mit je einer Kraftstoff-Einspritzdüse ausgestattete erste und zweite Ansaugrohre führen und von denen wenigstens das zweite über eine steuerbare Klappe in Abhängigkeit von einem, aus Betriebsbedingungen der Brennkraftmaschine ermittelten Betriebszustand (Einkanalbetrieb, Zweikanalbetrieb) der Brennkraftmaschine öffen- bzw. verschließbar ist, wobei eine aus denselben und/oder weiteren Betriebsbedingungen der Brennkraftmaschine ermittelte, einem Zylinder augenblicklich zuzuführende Gesamt-Kraftstoffmenge bei geschlossener Klappe (Einkanalbetrieb) lediglich über das Einspritzventil im ersten Ansaugrohr in dieses und bei geöffneter Klappe (Zweikanalbetrieb), ensprechend den, von den einzelnen Ansaugrohren geführten Anteilen an einer dem Zylinder zuströmenden Gesamt-Luftmasse aufgeteilt, über beide Einspritzventile in beide Ansaugrohre abgespritzt wird, dadurch gekennzeichnet, daß die während des Auf- bzw. Zusteuerns der Klappe (11) dem Zylinder (2) zuzuführende Gesamtkraftstoffmenge (tg) entsprechend den sich mit der Bewegung der Klappe (11) in den Ansaugrohren (9, 10) ändernden Strömungsverhältnissen über die jeweiligen Einspritzventile (12, 13) auf die beiden Ansaugrohre (9, 10) aufgeteilt wird.

2. Mehrzylinder-Brennkraftmaschine nach Anspruch 1, dadurch gekennzeichnet, daß die sich mit der Bewegung der Klappe (11) in den Ansaugrohren (9, 10) ändernden Strömungsverhältnisse über eine Öffnungsfunktion (k(alphai)) erfaßt werden, welche einem Öffnungswinkel (alphai) der Klappe (11) einen Korrekturwert (ko=k(alphai)) zuweist.

3. Mehrzylinder-Brennkraftmaschine nach Anspruch 2, dadurch gekennzeichnet, daß der Korrekturwert (ko) normiert ist und einen Zahlenwert zwischen (ko=0) für die geschlossene Klappe (11), (alphai=0°) und (ko=1) für die geöffnete Klappe (11), (alphai=90°) annimmt.

4. Mehrzylinder-Brennkraftmaschine nach Anspruch 3, dadurch gekennzeichnet, daß die im Zweikanalbetrieb bei vollständig geöffneter Klappe (11) über die Ansaugrohre (9, 10) in den Zylinder (2) einströmenden Anteile (Luftmassen-Anteil (mla) im ersten Ansaugrohr (9), Luftmassen-Anteil (mlb) im zweiten Ansaugrohr (10) an der Gesamt-Luftmasse (mlg) über einen Verteilungsfaktor (x) bestimmt werden (mla=(1-x)mlg, mlb=x*mlg), wobei der Verteilungsfaktor (x) über ein Kennfeld (fx(mlg, nmot....)) aus Betriebsbedingungen der Brennkraftmaschine ermittelt wird (x=fx(mlg, nmot,...)) und einen Wert zwischen (0) und (1) annimmt.

5. Mehrzylinder-Brennkraftmaschine nach Anspruch 4, dadurch gekennzeichnet, daß sich die Anteile der von den Einspritzventilen (12, 13) in die Ansaugrohre (9,10) abzuspritzenden Kraftstoffmengen (ta, tb) aus der Gesamt-Kraftstoffmenge (tg) während des Auf- bzw. Zusteuerns der Klappe (11)
- für das Einspritzventil (12) im ersten Ansaugrohr (9) zu ta=tg(1-ko*x)
- für das Einspritzventil (13) im zweiten Ansaugrohr (10 zu tb=tg*ko*x
ergeben.

6. Mehrzylinder-Brennkraftmaschine nach Anspruch 5, dadurch gekennzeichnet, daß die Gesamt-Kraftstoffmenge (tg) im Einkanalbetrieb aus einem ersten Kennfeld (tg=tge=fe(mlg, nmot,...)) und im Zweikanalbetrieb aus einem zweiten Kennfeld (tg=tgz=fz(mlg, nmot,...)) bestimmt wird und eine Umschaltschwelle für die Kennzeichnung der beiden Betriebszustände eine Hystere (obere Umschaltschwelle (uso) für den Übergang des Betriebszustands in den Zweikanalbetrieb, untere Umschaltschwelle (usu) für den Übergang des Betriebszustands in den Einkanalbetrieb aufweist.

**Claims**

1. A multiple-cylinder internal combustion engine with at least two inlet valves per cylinder, separate first and second inlet pipes dimensioned differently in their length and/or cross-section and each provided with a fuel injection nozzle leading to the said inlet valves and it being possible for at least the second of the said inlet valves to be opened and closed by way of a controllable flap as a function of an operating state (single-port operation, double-port operation) of the internal combustion engine determined from the operating conditions of the internal combustion engine, a total quantity of fuel determined from the same and/or additional operating conditions of the internal combustion engine and to be momentarily supplied to a cylinder being injected into the two inlet pipes only by way of the injection valve in the first inlet pipe into the latter when the flap is closed (single-port operation) and, separated in accordance with the portions – guided by the individual inlet pipes – of a total mass of air flowing to the cylinder, by way of the two injection valves when the flap is open (double-port operation), characterized in that the total quantity of fuel (tg) to be supplied to the cylinder (2) during the opening or closing of the flap (11) is allotted to the two inlet pipes (9, 10) by way of the respective injection valves (12, 13) in accordance with the flow rations varying with the movement of the flap (11) in the inlet pipes (9, 10).

2. A multiple-cylinder internal combustion engine according to Claim 1, characterized in that the flow ratios varying with the movement of the flap (11) in the inlet pipes (9, 10) are determined by way of an opening function (k(alphai)) which assigns a correction value (ko=k(alphai)) to an opening angle (alphai) of the flap (11),

3. A multiple-cylinder internal combustion engine according to Claim 2, characterized in that the correction value (ko) is standardized and assumes e numerical value of between (ko=0) for the closed flap (11), (alphai=0°), and (ko=1) for the opened flap (11), (alphai=90°).

4. A multiple-cylinder internal combustion engine according to Claim 3, characterized in that the portions portion of air quantity (mla) in the first inlet pipe (9), portion of air quantity (mlb) in the second inlet pipe (10)) – flowing into the cylinder (2) by way of the inlet pipes (9, 10) in the two-port operation with the flap (11) fully opened – of the total quantity of air (mlg) are determined (mla=(l-x)mlg, mlb=x*mlg) by way of a distribution factor (x), the distribution factor (x) being determined (x=fx(mlg, nmot, ...)) from the operating conditions of the internal combustion engine by way of a characteristic graph (fx(mlg, nmot, ...)) and assumes a value of between (0) and (1).

5. A multiple-cylinder internal combustion engine according to Claim 4, characterized in that the portions of the quantities of fuel (ta, tb) to be injected into the inlet pipes by the injection valves (12, 13) from the total quantity of fuel (tg) during the opening and closing of the flap (11) give - ta=tg(l-ko*x) for the injection valve (12) in the first inlet pipe (9) - tb=tg*ko*x) for the injection valve (13) in the second inlet pipe (10).

6, A multiple-cylinder internal combustion engine according to Claim 5, characterized in that the total quantity of fuel (tg) is determined from a first characteristic graph (tg=tge=fe(mlg, nmot, ...)) in single-port operation and from a second characteristic graph (tg=tgz=fz(mlg, nmot, ...)) in double-port operation, and a change-over threshold for designating the two operating states has a hysteresis (upper change-over threshold (uso) for the transition of the operating state into the double-port operation, lower change-over threshold (usu) for the transition of the operating state into the single-duct operation).

**Revendications**

1. Moteur à combustion interne polycylindrique comportant au moins deux soupapes d'admission par cylindre, auxquelles accèdent des première et deuxième pipes d'aspiration séparées, de longueur et/ou de section transversale de dimensions différentes, équipées chacune d'un injecteur de carburant et dont au moins la deuxième pipe d'aspirationest susceptible d'être ouverte ou fermée, par l'intermédiaire d'un clapet commandable, en fonction d'un état de fonctionnement déterminé d'après les conditions de fonctionnement du moteur à combustion interne (fonctionnement à un canal, fonctionnement à deux canaux), un débit global de carburant à amener instantanément à un cylindre, déterminé à partir des mêmes conditions de fonctionnement, ou d'autres, du moteur à combustion interne, étant injecté par l'intermédiaire des deux soupapes d'injection situées dans les deux pipesd'aspiration, à savoir, uniquement par la soupape d'injection située dans la première pipe d'aspiration lorsque le clapet est fermé (fonctionnement à un canal) et, par les deux soupapes d'injection situées dans les deux pipes d'aspiration lorsque le clapet est ouvert (fonctionnement à deux canaux), en étant réparti en fonction des proportions, amenées par les pipes d'aspiration individuelles, d'une masse d'air globale à amener au cylindre, caractérisé en ce que le débit global de carburant (tg) qui est à amener au cylindre (2), pendant l'ouverture ou la fermeture commandée du clapet (11), en fonction des conditions d'écoulement variant avec le déplacement du clapet (11) dans les pipes d'aspiration (9,10), est réparti entre les deux pipes d'aspiration (9,10) par l'intermédiaire des soupapes d'injection (12,13) respectives.

2. Moteur à combustion interne polycylindrique selon la revendication 1, caractérisé en ce que les conditions d'écoulement, variant avec le déplacement du clapet (11) dans les pipes d'aspiration (9,10), sont enregistrées par l'intermédiaire d'une fonction d'ouverture (k(alphai), qui affecte une valeur de correction (ko=k(alphai) à un angle d'ouverture (alphai) du clapet (11).

3. Moteur à combustion interne polycylindrique selon la revendication 2, caractérisé en ce que la valeur de correction (ko) est normée et prend une valeur numérique comprise entre (ko=0) pour le clapet (11) fermé, (alphai=0°) et (ko=1) pour le clapet (11) ouvert, (alphai=90°).

4. Moteur à combustion interne polycylindrique selon la revendication 3, caractérisé en ce que les proportions (proportion du débit–masse d'air (mla) dans la première pipe d'aspiration (9), la proportion de débit–masse d'air (mlb) dans la deuxième pipe d'aspiration (10)) s'écoulant dans le cylindre (2) par l'intermédiaire des pipes d'aspiration (9,10) lorsque le clapet (11) est complètement ouvert, dans le cas du fonctionnement à deux canaux, rapportées au débit–masse d'air (mlg) sont déterminées par l'intermédiaire d'un facteur de répartition (x) (mla=(1–x)mlg, mlb=x*mlg), le facteur de répartition (x) étant déterminé sur un diagramme de caractéristiques (fx(mlg, nmot...)), à partir des conditions de fonctionnement du moteur à combustion interne et prenant une valeur comprise entre (0) et (1).

5. Moteur à combustion interne polycylindrique selon la revendication 4, caractérisé en ce que les proportions de quantité de carburant (ta,tb) à pulvériser par les soupapes d'injection (12,13) dans les pipes d'aspiration (9,10) résultent du débit global de carburant (tg) pendant l'ouverture ou la fermeture commandée du clapet (11),
– pour la soupape d'injection (12) située dans la première pipe d'aspiration (9) de ta=tg(1–ko*x),
– pour la soupape d'injection (13) située dans la deuxième pipe d'aspiration (10) de tb=tg*ko*x.

6. Moteur à combustion interne polycylindrique selon la revendication 5, caractérisé en ce que le débit global de carburant (tg) dans le fonctionnement à un canal est déterminé par un premier diagramme de caractéristiques (tg=tge=fe(mlg, nmot...)) et dans le fonctionnement à deux canaux d'un deuxième diagramme de caractéristiques (tg=tgz=fz(mlg, nmot...)) et un seuil de commutation pour la caractérisation des deux états de fonctionnement présentant un hystérésis (seuil de commutation supérieur (uso) pour le passage de l'état de fonctionnement en fonctionnement à deux canaux, seuil de commutation inférieur (usu) pour le passage de l'état de fonctionnement dans le fonctionnement à un canal).

FIG.1

EP 0 262 351 B1

FIG.2

FIG.3

FIG.4

FIG.5

**FIG.6**

FIG.7

FIG.8

FIG.9

**FIG.10**

Start — 16

Initialisierung — 17

(A) — 18

Meßwerterfassung u. Aufbereitung — 19

Betriebsbedingungen ermitteln — 20

ko = k (alphai) — 22

Betriebszustand bz ermitteln — 23

24
bz < us ?

nein, Zweikanalbetrieb

ja, Einkanalbetrieb

tg = tge = fe (mlg, nmot, ...) — 38

tg = tgz = fz (mlg, nmot, ...) — 39

Klappe schließen — 25

Klappe öffnen — 32

26
alphai = 0° ?

nein

x = fx (mlg, nmot, ...) — 33

x = fx (mlg, nmot, ...) — 30

nein

34
alphai = 90° ?

ja

ta = tg
tb = 0 — 27

ta = tg (1-ko*x)
tb = tg * ko * x — 31

ta = tg (1-x)
tb = tg * x — 35

us = uso — 40

us = usu — 41

28

Einspritzventile ansteuern ta,tb — 29